# EUROPEAN PATENT SPECIFICATION

(11) **EP 4 227 332 B1**
(45) Date of publication and mention of the grant of the patent: **01.01.2025**
(21) Application number: 21906101.7
(22) Date of filing: 01.10.2021
(51) Int. Cl.: C08F 289/00, C08L 11/02, C08L 93/04, C08F 2/44, C08J 5/02, A41D 19/00, A41D 19/04, A61L 29/04

(54) **CHLOROPRENE POLYMER COMPOSITION, DIP-MOLDED ARTICLE, AND METHOD FOR PRODUCING SAID COMPOSITION AND ARTICLE**
CHLOROPRENPOLYMERZUSAMMENSETZUNG, TAUCHGEFORMTER ARTIKEL UND VERFAHREN ZUR HERSTELLUNG DER BESAGTEN ZUSAMMENSETZUNG UND DES ARTIKELS
COMPOSITION DE POLYMÈRE DE CHLOROPRÈNE, ARTICLE MOULÉ PAR IMMERSION ET PROCÉDÉ DE PRODUCTION DE LADITE COMPOSITION ET DUDIT ARTICLE

(30) Priority: 16.12.2020 JP 2020208295
(43) Date of publication of application: 16.08.2023
(73) Proprietor: Denka Company Limited, Tokyo 103-8338 (JP)
(72) Inventor: KATO, Masahiro, Tokyo 103-8338 (JP); ITO, Misaki, Tokyo 103-8338 (JP); KUMAGAI, Yushi, Tokyo 103-8338 (JP); SAITO, Yutaka, Tokyo 103-8338 (JP)
(74) Representative: Hoffmann Eitle
(86) International application number: PCT/JP2021/036498
(87) International publication number: WO 2022/130737

(56) References cited:
- EP-A1- 0 717 074
- EP-A1- 2 816 061
- EP-A1- 3 660 057
- WO-A1-2013/141170
- WO-A1-2019/009038
- WO-A1-2021/006118
- JP-A- 2004 525 991
- JP-A- 2006 143 826
- JP-A- H11 116 622

## Description

### Technical Field

The present invention relates to a chloroprene polymer composition, a dip-molded article, methods for producing these, and the like.

### Background Art

A chloroprene polymer composition containing a chloroprene polymer has been used in various fields such as a dip-molded article (dip-molded product), a fiber treating agent, a paper processing agent, an adhesive, a bonding adhesive, elastic asphalt (modified asphalt), and elastic cement. Particularly, in the dip-molded article, a chloroprene polymer composition is used as a main raw material for various gloves for household use, industrial use, surgical use, and the like. In the use applications of gloves, conventionally, a natural rubber has been mainly used, but since allergies due to a protein and the like contained in the natural rubber become problematic, it has been recommended to use synthetic rubber gloves. In particular, a chloroprene polymer has physical properties close to those of the natural rubber in terms of texture and the like, and thus the chloroprene polymer has been studied as an alternative material to the natural rubber (see, for example, Patent Literatures 1 and 2).

### Citation List

### Patent Literature

Patent Literature 1: International Publication WO 2019/009038
Patent Literature 2: Japanese Unexamined Patent Publication No. 2019-143002

### Summary of Invention

### Technical Problem

A dip-molded article (such as gloves) to be obtained using a chloroprene polymer composition may be inferior to the case of using a natural rubber or an isoprene rubber in breaking strength in some cases. Therefore, it is required for the chloroprene polymer composition to improve the breaking strength of a dip-molded article of the chloroprene polymer composition.

An object of an aspect of the present invention is to provide a method for producing a chloroprene polymer composition by which a dip-molded article having excellent breaking strength can be obtained. An object of another aspect of the present invention is to provide a chloroprene polymer composition with which a dip-molded article having excellent breaking strength can be obtained. An object of still another aspect of the present invention is to provide a dip-molded article having excellent breaking strength and a method for producing the same.

### Solution to Problem

A first embodiment of the aspect of the present invention relates to a method for producing a chloroprene polymer composition containing a chloroprene polymer, the method including: a first polymerization step of polymerizing a monomer containing chloroprene at a polymerization rate of 20% or more to obtain a first polymer composition containing a polymer; a mixing step of mixing the first polymer composition with a rosin containing at least one conjugate resin acid component selected from the group consisting of abietic acid, neoabietic acid, palustric acid, levopimaric acid, and salts thereof; and a second polymerization step of polymerizing a monomer containing chloroprene in the presence of the polymer and the conjugate resin acid component to obtain a second polymer composition containing a chloroprene polymer.

Another aspect of the present invention relates to a chloroprene polymer composition containing a chloroprene polymer, in which in gas chromatography of an extract extracted from a dip-molded article of the chloroprene polymer composition using an ethanol-toluene azeotropic mixture, a ratio of a peak area of conjugate resin acid components that are abietic acid, neoabietic acid, palustric acid, levopimaric acid, and salts thereof is more than 0% and 50% or less on the basis of a total peak area provided by the extract; and wherein a content of the conjugate resin acid components is 0.4% by mass or more on the basis of the total mass of the chloroprene polymer.

Still another aspect of the present invention relates to a dip-molded article of the aforementioned chloroprene polymer composition.

Still another aspect of the present invention relates to a method for producing a dip-molded article, the method including dip-molding a chloroprene polymer composition obtained by the aforementioned method for producing a chloroprene polymer composition or the aforementioned chloroprene polymer composition.

### Advantageous Effects of Invention

According to an aspect of the present invention, it is possible to provide a method for producing a chloroprene polymer composition by which a dip-molded article having excellent breaking strength can be obtained. According to another aspect of the present invention, it is possible to provide a chloroprene polymer composition with which a dip-molded article having excellent breaking strength can be obtained. According to still another aspect of the present invention, it is possible to provide a dip-molded article having excellent breaking strength and a method for producing the same.

### Description of Embodiments

Hereinafter, embodiments for carrying out the present invention will be described. Note that, the present invention is not limited to embodiments described below.

"A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification may be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. The term "step" includes not only an independent step but also a step by which an intended action of the step is achieved, though the step cannot be clearly distinguished from other steps. The term "room temperature" means 25°C.

### <Chloroprene polymer composition and producing method therefor>

A method for producing a chloroprene polymer composition of the present embodiment (encompassing a method for producing a chloroprene polymer composition of a first embodiment; the same applies hereinafter) is a method for producing a chloroprene polymer composition containing a chloroprene polymer.

A method for producing a chloroprene polymer composition includes: a polymerization step A of polymerizing a monomer containing chloroprene at a polymerization rate of 20% or more to obtain a polymer composition A containing a chloroprene polymer; and a mixing step A of mixing the polymer composition A with a rosin containing at least one conjugate resin acid component C selected from the group consisting of abietic acid, neoabietic acid, palustric acid, levopimaric acid, and salts thereof, in which a mixed amount of the rosin in the mixing step A is more than 0 parts by mass and 23 parts by mass or less with respect to 100 parts by mass of solid content of the polymer composition A.

A method for producing a chloroprene polymer composition of a first embodiment includes: a polymerization step B 1 (first polymerization step) of polymerizing a monomer containing chloroprene at a polymerization rate of 20% or more to obtain a polymer composition B 1 (first polymer composition) containing a polymer B; a mixing step B of mixing the polymer composition B 1 with a rosin containing at least one conjugate resin acid component C selected from the group consisting of abietic acid, neoabietic acid, palustric acid, levopimaric acid, and salts thereof; and a polymerization step B2 (second polymerization step) of polymerizing a monomer containing chloroprene in the presence of the polymer B (the polymer obtained in the polymerization step B 1) and the conjugate resin acid component C to obtain a polymer composition B2 (second polymer composition) containing a chloroprene polymer.

The chloroprene polymer composition of the present embodiment is a chloroprene polymer composition containing a chloroprene polymer and can be obtained by the method for manufacturing a chloroprene polymer composition of the present embodiment. In the chloroprene polymer composition of the present embodiment, in gas chromatography of an extract extracted from a dip-molded article of the chloroprene polymer composition using an ethanol-toluene azeotropic mixture, a ratio of a peak area of conjugate resin acid components that are abietic acid, neoabietic acid, palustric acid, levopimaric acid, and salts thereof is more than 0% and 60% or less on the basis of a total peak area provided by the extract.

The chloroprene polymer composition of the present embodiment contains a chloroprene polymer and at least one conjugate resin acid component C selected from the group consisting of abietic acid, neoabietic acid, palustric acid, levopimaric acid, and salts thereof. The chloroprene polymer composition of the present embodiment may contain at least one non-conjugate resin acid component N selected from the group consisting of dehydroabietic acid, dihydroabietic acid, pimaric acid, isopimaric acid, and salts thereof. The chloroprene polymer composition of the present embodiment may be a chloroprene polymer latex in which the chloroprene polymer is dispersed in water.

According to the chloroprene polymer composition and the producing method therefor of the present embodiment, it is possible to obtain a dip-molded article having excellent breaking strength, and for example, as shown in Examples described below, it is possible to obtain excellent breaking strength in a dip-molded article to be obtained using a composition containing the chloroprene polymer with sulfur, zinc oxide, and the like. According to the chloroprene polymer composition and the producing method therefor of the present embodiment, the breaking strength as measured according to JIS K 6251 can be obtained to be 20.0 MPa or more.

The conjugate resin acid component has a conjugate double bond and is contained in a rosin. The rosin contains a non-conjugate resin acid component having no conjugate double bond in addition to such a conjugate resin acid component, and can be used as an emulsifier for synthetic rubber polymerization. It is generally known that the conjugate double bond in the emulsifier inhibits a polymerization reaction, and typically, there is a tendency that an emulsifier obtained by causing the conjugate double bond in the conjugate resin acid component to disappear by a disproportionation reaction is used. On the other hand, in the method for producing a chloroprene polymer composition of the present embodiment, although a conjugate resin acid component having a conjugate double bond is used, various physical properties can be suitably obtained by the aforementioned characteristics being satisfied.

According to the chloroprene polymer composition and the producing method therefor of the present embodiment, excellent breaking elongation can also be obtained in a dip-molded article. For example, according to the chloroprene polymer composition and the producing method therefor of the present embodiment, the breaking elongation as measured according to JIS K 6251 can be obtained to be 1000% or more.

According to the chloroprene polymer composition and the producing method therefor of the present embodiment, excellent modulus at elongation (flexibility) can also be obtained in a dip-molded article. For example, according to the chloroprene polymer composition and the producing method therefor of the present embodiment, the modulus at 25% elongation as measured according to JIS K 6251 can be obtained to be 1.4 MPa or less, and the modulus at 300% elongation as measured according to JIS K 6251 can be obtained to be 2.5 MPa or less.

According to the chloroprene polymer composition and the producing method therefor of the present embodiment, it is possible to obtain excellent mechanical strength while suitably maintaining flexibility in a dip-molded article, and it is possible to obtain excellent breaking strength and breaking elongation while suitably maintaining flexibility in a dip-molded article.

In the polymerization steps A, B1, and B2 (hereinafter, these are collectively referred to simply as "polymerization step"), a monomer containing chloroprene (2-chloro-1,3-butadiene) is polymerized to obtain a polymer composition containing a chloroprene polymer. In the polymerization steps A and B1, a monomer containing chloroprene may be polymerized in a state where the conjugate resin acid component C does not substantially exist. In the polymerization step B2, a monomer containing chloroprene is polymerized in the presence of the polymer B and the conjugate resin acid component C to obtain a polymer composition containing a chloroprene polymer. In the polymerization step B2, a monomer such as chloroprene may be added.

The chloroprene polymer obtained in the polymerization step and the chloroprene polymer in the chloroprene polymer composition of the present embodiment (hereinafter, these are collectively referred to simply as "chloroprene polymer") has chloroprene as a monomer unit (chloroprene monomer unit; monomer unit = structural unit), and can have a chloroprene-derived monomer unit. Examples of the chloroprene polymer include a homopolymer of chloroprene and a copolymer of chloroprene (a copolymer of chloroprene and a monomer copolymerizable with chloroprene), and a mixture of these polymers may be used. In the polymerization step, chloroprene may be polymerized alone, and chloroprene and the monomer copolymerizable with chloroprene may be copolymerized.

Examples of the monomer copolymerizable with chloroprene include esters of (meth)acrylic acid (such as methyl (meth)acrylate, butyl (meth)acrylate, and 2-ethylhexyl (meth)acrylate), hydroxyalkyl (meth)acrylate (such as 2-hydroxymethyl (meth)acrylate, 2-hydroxyethyl (meth)acrylate, and 2-hydroxypropyl (meth)acrylate), (meth)acrylic acid, 2,3-dichloro-1,3-butadiene, 1-chloro-1,3-butadiene, butadiene, isoprene, ethylene, styrene, and (meth)acrylonitrile. The monomer copolymerizable with chloroprene is not limited to one kind, and, for example, the copolymer of chloroprene may be a copolymer obtained by copolymerizing three or more kinds of monomers containing chloroprene.

The chloroprene polymer may include at least one selected from the group consisting of a homopolymer of chloroprene and a copolymer of chloroprene and 2,3-dichloro-1,3-butadiene, from the viewpoint of easily obtaining excellent mechanical strength (such as breaking strength and breaking elongation) while suitably maintaining flexibility in a dip-molded article.

The used amount of the chloroprene in the method for producing a chloroprene polymer composition of the present embodiment (the total amount in the polymerization step B 1 and the polymerization step B2 in the method for producing a chloroprene polymer composition of the first embodiment) may be in the following range on the basis of the total amount of the monomers used in polymerization of the chloroprene polymer or the total amount of the chloroprene and the 2,3-dichloro-1,3-butadiene, from the viewpoint of easily obtaining excellent mechanical strength (such as breaking strength and breaking elongation) while suitably maintaining flexibility in a dip-molded article. The used amount of the chloroprene may be 50% by mass or more, 60% by mass or more, 70% by mass or more, 75% by mass or more, 80% by mass or more, 85% by mass or more, 88% by mass or more, or 90% by mass or more. The used amount of the chloroprene may be 100% by mass or less, less than 100% by mass, 98% by mass or less, 95% by mass or less, 93% by mass or less, 92% by mass or less, 91% by mass or less, or less than 91% by mass. From these viewpoints, the used amount of the chloroprene may be 50 to 100% by mass, 70 to 98% by mass, or 80 to 95% by mass.

The content of the chloroprene monomer unit in the chloroprene polymer may be in the following range on the basis of the total amount of the monomer units constituting the chloroprene polymer or the total amount of the chloroprene monomer unit and the 2,3-dichloro-1,3-butadiene monomer unit, from the viewpoint of easily obtaining excellent mechanical strength (such as breaking strength and breaking elongation) while suitably maintaining flexibility in a dip-molded article. The content of the chloroprene monomer unit may be 50% by mass or more, 60% by mass or more, 70% by mass or more, 75% by mass or more, 80% by mass or more, 85% by mass or more, 88% by mass or more, or 90% by mass or more. The content of the chloroprene monomer unit may be 100% by mass or less, less than 100% by mass, 98% by mass or less, 95% by mass or less, 93% by mass or less, 92% by mass or less, 91% by mass or less, or less than 91% by mass. From these viewpoints, the content of the chloroprene monomer unit may be 50 to 100% by mass, 70 to 98% by mass, or 80 to 95% by mass.

The monomer to be polymerized in the polymerization step may include chloroprene and 2,3-dichloro-1,3-butadiene from the viewpoint of easily obtaining excellent mechanical strength (such as breaking strength and breaking elongation) while suitably maintaining flexibility in a dip-molded article. The used amount of the 2,3-dichloro-1,3-butadiene in the method for producing a chloroprene polymer composition of the present embodiment (the total amount in the polymerization step B1 and the polymerization step B2 in the method for producing a chloroprene polymer composition of the first embodiment) may be in the following range on the basis of the total amount of the monomers used in polymerization of the chloroprene polymer or the total amount of the chloroprene and the 2,3-dichloro-1,3-butadiene, from the viewpoint of easily obtaining excellent mechanical strength (such as breaking strength and breaking elongation) while suitably maintaining flexibility in a dip-molded article. The used amount of the 2,3-dichloro-1,3-butadiene may be 50% by mass or less, 40% by mass or less, 30% by mass or less, 25% by mass or less, 20% by mass or less, 15% by mass or less, 12% by mass or less, or 10% by mass or less. The used amount of the 2,3-dichloro-1,3-butadiene may be 0% by mass or more, more than 0% by mass, 2% by mass or more, 5% by mass or more, 7% by mass or more, 8% by mass or more, 9% by mass or more, or more than 9% by mass. From these viewpoints, the used amount of the 2,3-dichloro-1,3-butadiene may be 0 to 50% by mass, 2 to 30% by mass, or 5 to 20% by mass.

The chloroprene polymer may have the chloroprene monomer unit and the 2,3-dichloro-1,3-butadiene monomer unit from the viewpoint of easily obtaining excellent mechanical strength (such as breaking strength and breaking elongation) while suitably maintaining flexibility in a dip-molded article. The content of the 2,3-dichloro-1,3-butadiene monomer unit (the copolymerized amount of the 2,3-dichloro-1,3-butadiene) in the chloroprene polymer may be in the following range on the basis of the total amount of the monomer units constituting the chloroprene polymer or the total amount of the chloroprene monomer unit and the 2,3-dichloro-1,3-butadiene monomer unit. The content of the 2,3-dichloro-1,3-butadiene monomer unit may be 50% by mass or less, 40% by mass or less, 30% by mass or less, 25% by mass or less, 20% by mass or less, 15% by mass or less, 12% by mass or less, or 10% by mass or less. The content of the 2,3-dichloro-1,3-butadiene monomer unit may be 0% by mass or more, more than 0% by mass, 2% by mass or more, 5% by mass or more, 7% by mass or more, 8% by mass or more, 9% by mass or more, or more than 9% by mass. From these viewpoints, the content of the 2,3-dichloro-1,3-butadiene monomer unit may be 0 to 50% by mass, 2 to 30% by mass, or 5 to 20% by mass. The content of the 2,3-dichloro-1,3-butadiene monomer unit can be determined by pyrolysis gas chromatography of the chloroprene polymer obtained by freeze-drying the chloroprene polymer composition.

The chloroprene polymer may not have at least one (meth)acrylic acid selected from the group consisting of acrylic acid and methacrylic acid as a monomer unit. The content of the acrylic acid monomer unit or the methacrylic acid monomer unit may be less than 2.0% by mass, less than 1.0% by mass, 0.5% by mass or less, or 0.1% by mass or less, and may be 0% by mass, on the basis of the total amount of the monomer units constituting the chloroprene polymer. In the polymerization step, the used amount of acrylic acid (the total amount in polymerization step B1 and the polymerization step B2 in the method for producing a chloroprene polymer composition of the first embodiment; the same applies to the used amount of methacrylic acid) or the used amount of methacrylic acid may be less than 2.0% by mass, less than 1.0% by mass, 0.5% by mass or less, or 0.1% by mass or less, and may be 0% by mass, on the basis of the total amount of the monomers used in polymerization of the chloroprene polymer.

The chloroprene polymer may be a sulfur-modified chloroprene polymer, a mercaptan-modified chloroprene polymer, a xanthogen-modified chloroprene polymer, a dithiocarbonate-based chloroprene polymer, a trithiocarbonate-based chloroprene polymer, a carbamate-based chloroprene polymer, or the like.

In the polymerization step, a monomer containing chloroprene can be polymerized by a polymerization method such as emulsion polymerization, solution polymerization, suspension polymerization, or bulk polymerization. Among these polymerization methods, from the viewpoint of easily controlling and easily extracting a chloroprene polymer from the polymer composition after polymerization, the viewpoint of a relatively fast polymerization rate, and the like, a monomer may be polymerized by emulsion polymerization.

The emulsion polymerization is one type of radical polymerization, and a monomer can be charged in a polymerization tank together with water, an emulsifier, an emulsification aid, a chain transfer agent, a polymerization initiator (catalyst), a reducing agent (for example, sodium bisulfite), or the like and can be polymerized. Examples of the emulsifier include a rosin acid, an alkali metal salt of a rosin acid, a disproportionated rosin, an anionic emulsifier (for example, a sodium salt of β-naphthalene sulfonic acid formalin condensate), and a non-ionic emulsifier, and a plurality of kinds thereof may be used in combination.

As the chain transfer agent, a chain transfer agent which is commonly used in emulsion polymerization of chloroprene can be used. Examples of the chain transfer agent include long chain alkylmercaptans such as n-dodecylmercaptan and tert-dodecylmercaptan; dialkylxanthogen disulfides such as diisopropylxanthogen disulfide and diethylxanthogen disulfide; and iodoform. The used amount of the chain transfer agent may be 1 part by mass or less, 0.5 parts by mass or less, 0.1 parts by mass or less, 0.08 parts by mass or less, 0.05 parts by mass or less, less than 0.05 parts by mass, or 0.04 parts by mass or less, with respect to 100 parts by mass of the monomers used in polymerization of the chloroprene polymer. The used amount of the chain transfer agent may be 0.001 parts by mass or more, 0.005 parts by mass or more, or 0.01 parts by mass or more, with respect to 100 parts by mass of the monomers used in polymerization of the chloroprene polymer.

Examples of the polymerization initiator include potassium persulfate, ammonium persulfate, sodium persulfate, hydrogen peroxide, and organic peroxides such as benzoyl peroxide.

The polymerization temperature may be 5 to 55°C or 15 to 45°C from the viewpoint of easily maintaining the temporal stability in the flexibility of the chloroprene polymer composition.

In the polymerization steps A and B1, a monomer containing chloroprene is polymerized at a polymerization rate (unit: % by mass) of 20% or more. By performing the mixing steps A and B after such a polymerization rate is obtained, since a state suitable for formation of a dip-molded article is easily maintained in the subsequent step (for example, the stability during polymerization is easily maintained because an abrupt increase in viscosity of the polymer composition in the polymerization step B2 hardly occurs), it is possible to obtain a dip-molded article having excellent mechanical strength (such as breaking strength and breaking elongation) while suitably maintaining flexibility.

The polymerization rate in the polymerization step A (the polymerization rate at the time of mixing a rosin in the mixing step A, unit: % by mass) may be in the following range. The polymerization rate in the polymerization step A may be 30% or more, 40% or more, 50% or more, 60% or more, 70% or more, 80% or more, 85% or more, or 90% or more, from the viewpoint of easily obtaining excellent mechanical strength (such as breaking strength and breaking elongation) while suitably maintaining flexibility in a dip-molded article. The polymerization rate in the polymerization step A may be less than 100%, 95% or less, or 90% or less.

The polymerization rate in the polymerization step B1 (the polymerization rate at the time of mixing a rosin in the mixing step B) may be in the following range. The polymerization rate in the polymerization step B1 may be 30% or more, 40% or more, 50% or more, 60% or more, 70% or more, 80% or more, or 85% or more, from the viewpoint of easily obtaining excellent mechanical strength (such as breaking strength and breaking elongation). The polymerization rate in the polymerization step B1 may be less than 100%, 95% or less, 90% or less, 85% or less, 80% or less, 70% or less, 60% or less, 50% or less, 40% or less, 30% or less, or 20% or less, from the viewpoint of easily maintaining flexibility suitably.

The total polymerization rate (unit: % by mass) in the polymerization step B1 and the polymerization step B2 in the method for producing a chloroprene polymer composition of the first embodiment may be in the following range. The polymerization rate may be 30% or more, 40% or more, 50% or more, 60% or more, 70% or more, 80% or more, 85% or more, or 90% or more, from the viewpoint of easily obtaining excellent mechanical strength (such as breaking strength and breaking elongation) while suitably maintaining flexibility in a dip-molded article. The polymerization rate may be less than 100%, 95% or less, or 90% or less.

When the polymerization rate reaches a prescribed numerical value, the polymerization can be terminated by using a polymerization terminator. Examples of the polymerization terminator include thiodiphenylamine, 4-tert-butylcatechol, 2,2'-methylenebis(4-methyl-6-tert-butylphenol), and diethylhydroxylamine.

The method for producing a chloroprene polymer composition may include, after the mixing step A, a polymerization step of polymerizing a monomer containing chloroprene in the presence of the polymer (chloroprene polymer) obtained in the polymerization step A and the conjugate resin acid component C, that is, the rosin containing the conjugate resin acid component C may be mixed during polymerization of a monomer containing chloroprene. The method for producing a chloroprene polymer composition may not include such a polymerization step after the mixing step A, that is, the rosin containing the conjugate resin acid component C may be mixed after the completion of all of the polymerization steps. In this case, after the polymerization rate reaches a prescribed polymerization rate in the polymerization step A, removal of unreacted monomers and/or a condensation treatment may be performed, and then the mixing step A may be performed.

In the mixing steps A and B (hereinafter, collectively referred to as "mixing step"), the polymer composition obtained in the polymerization step A or the polymerization step B 1 is mixed with a rosin containing at least one conjugate resin acid component C selected from the group consisting of abietic acid, neoabietic acid, palustric acid, levopimaric acid, and salts thereof (for example, metal salts). Examples of the salts of abietic acid, neoabietic acid, palustric acid, and levopimaric acid include alkali metal salts such as a sodium salt and potassium salt.

In the mixing step, the polymer composition obtained in the polymerization step A or the polymerization step B 1 may be mixed with a rosin containing a conjugate resin acid component C and a non-conjugate resin acid component. The non-conjugate resin acid component may be at least one selected from the group consisting of dehydroabietic acid, pimaric acid, isopimaric acid, dihydroabietic acid, and salts thereof. Examples of the salts of dehydroabietic acid, pimaric acid, isopimaric acid, and dihydroabietic acid include alkali metal salts such as a sodium salt and a potassium salt.

The rosin is typically a solid, and tends to be used by being dissolved in an alkali metal salt aqueous solution. Examples of a metal salt of a rosin acid in the rosin includes alkali metal salts such as sodium rosinate and potassium rosinate. The rosin is not a single compound but is a mixture of various isomers of a resin acid. As the resin acid contained in the rosin, there are a conjugate resin acid having a conjugate double bond, such as abietic acid, neoabietic acid, palustric acid, or levopimaric acid, and a non-conjugate resin acid having no conjugate double bond, such as pimaric acid, isopimaric acid, or dehydroabietic acid, and the content of each resin acid varies depending on the types of the rosin. The rosin is classified into a tall rosin, a gum rosin, a wood rosin, and the like depending on a production method. Since the wood rosin accounts for less than 1% of the entire rosin, the tall rosin, the gum rosin, and the like are commonly used.

The mixed amount of the rosin in the mixing step A is more than 0 parts by mass and 23 parts by mass or less with respect to 100 parts by mass of solid content of the polymer composition A obtained in the polymerization step A, from the viewpoint of obtaining a dip-molded article having excellent breaking strength. The mixed amount of the rosin may be 20 parts by mass or less, 18 parts by mass or less, 15 parts by mass or less, 12 parts by mass or less, 10 parts by mass or less, 8.0 parts by mass or less, 6.0 parts by mass or less, 5.5 parts by mass or less, 5.0 parts by mass or less, 3.0 parts by mass or less, or 1.0 part by mass or less, from the viewpoint of easily obtaining excellent breaking elongation and the viewpoint of easily maintaining flexibility suitably. The mixed amount of the rosin may be 0.1 parts by mass or more, 0.5 parts by mass or more, 1.0 part by mass or more, 2.0 parts by mass or more, 3.0 parts by mass or more, 4.0 parts by mass or more, 4.5 parts by mass or more, 5.0 parts by mass or more, 8.0 parts by mass or more, 10 parts by mass or more, 12 parts by mass or more, 15 parts by mass or more, 18 parts by mass or more, or 20 parts by mass or more, from the viewpoint of easily obtaining excellent breaking strength. From these viewpoints, the mixed amount of the rosin may be 0.1 to 23 parts by mass, 1.0 to 20 parts by mass, or 5.0 to 10 parts by mass.

The mixed amount of the rosin in the mixing step B may be in the following range with respect to 100 parts by mass of the monomers (the monomers used in polymerization of the chloroprene polymer), from the viewpoint of easily obtaining excellent mechanical strength (such as breaking strength and breaking elongation) while suitably maintaining flexibility in a dip-molded article. The mixed amount of the rosin may be 0.1 parts by mass or more, 0.5 parts by mass or more, 1.0 part by mass or more, 2.0 parts by mass or more, 3.0 parts by mass or more, 4.0 parts by mass or more, or 4.5 parts by mass or more. The mixed amount of the rosin may be 10 parts by mass or less, 8.0 parts by mass or less, 6.0 parts by mass or less, 5.0 parts by mass or less, or 4.5 parts by mass or less. From these viewpoints, the mixed amount of the rosin may be 0.1 to 10 parts by mass, 1.0 to 8.0 parts by mass, or 3.0 to 5.0 parts by mass.

The mixed amount of the rosin in the mixing step B may be in the following range with respect to 100 parts by mass of solid content of the polymer composition B2 obtained in the polymerization step B2, from the viewpoint of easily obtaining excellent mechanical strength (such as breaking strength and breaking elongation) while suitably maintaining flexibility in a dip-molded article. The mixed amount of the rosin may be 0.1 parts by mass or more, 0.5 parts by mass or more, 1.0 part by mass or more, 2.0 parts by mass or more, 3.0 parts by mass or more, 4.0 parts by mass or more, 4.5 parts by mass or more, or 5.0 parts by mass or more. The mixed amount of the rosin may be 23 parts by mass or less, 20 parts by mass or less, 18 parts by mass or less, 15 parts by mass or less, 12 parts by mass or less, 10 parts by mass or less, 8.0 parts by mass or less, 6.0 parts by mass or less, 5.5 parts by mass or less, or 5.0 parts by mass or less. From these viewpoints, the mixed amount of the rosin may be 0.1 to 23 parts by mass, 1.0 to 10 parts by mass, or 3.0 to 6.0 parts by mass. The mixed amount (relative amount) of the rosin with respect to 100 parts by mass of solid content of the polymer composition B2 can be adjusted by the used amount of the rosin, the polymerization rate in the polymerization step B2, or the like.

The total amount of abietic acid, neoabietic acid, palustric acid, levopimaric acid, and salts thereof (the total amount of the conjugate resin acid components C) in the rosin to be mixed with the polymer composition in the mixing step may be in the following range on the basis of the total mass of the rosin, from the viewpoint of easily obtaining excellent mechanical strength (such as breaking strength and breaking elongation) while suitably maintaining flexibility in a dip-molded article. The total amount may be 5% by mass or more, 10% by mass or more, 15% by mass or more, 20% by mass or more, 25% by mass or more, 30% by mass or more, or 35% by mass or more. The total amount may be 60% by mass or less, 55% by mass or less, 50% by mass or less, 45% by mass or less, or 40% by mass or less. From these viewpoints, the total amount may be 5 to 60% by mass, 10 to 50% by mass, or 20 to 40% by mass.

The total amount of dehydroabietic acid, dihydroabietic acid, pimaric acid, isopimaric acid, and salts thereof (the total amount of the non-conjugate resin acid components N) in the rosin to be mixed with the polymer composition in the mixing step may be in the following range on the basis of the total mass of the rosin, from the viewpoint of easily obtaining excellent mechanical strength (such as breaking strength and breaking elongation) while suitably maintaining flexibility in a dip-molded article. The total amount may be 10% by mass or more, 15% by mass or more, 20% by mass or more, 25% by mass or more, 30% by mass or more, 35% by mass or more, 40% by mass or more, or 45% by mass or more. The total amount may be 70% by mass or less, 65% by mass or less, 60% by mass or less, 55% by mass or less, or 50% by mass or less. From these viewpoints, the total amount may be 10 to 70% by mass, 20 to 60% by mass, or 30 to 50% by mass.

The total amount of abietic acid, neoabietic acid, palustric acid, levopimaric acid, and salts thereof (the total amount of the conjugate resin acid components C) in the rosin to be mixed with the polymer composition in the mixing step may be in the following range with respect to 100 parts by mass of the total amount of dehydroabietic acid, dihydroabietic acid, pimaric acid, isopimaric acid, and salts thereof (the total amount of the non-conjugate resin acid components N), from the viewpoint of easily obtaining excellent mechanical strength (such as breaking strength and breaking elongation) while suitably maintaining flexibility in a dip-molded article. The total amount may be 20 parts by mass or more, 30 parts by mass or more, 40 parts by mass or more, 50 parts by mass or more, 60 parts by mass or more, or 70 parts by mass or more. The total amount may be 150 parts by mass or less, 120 parts by mass or less, 100 parts by mass or less, less than 100 parts by mass, 90 parts by mass or less, or 80 parts by mass or less. From these viewpoints, the total amount may be 20 to 150 parts by mass, 50 to 100 parts by mass, or 60 to 80 parts by mass.

In the method for producing a chloroprene polymer composition of the present embodiment, after the polymerization step, the chloroprene polymer may be mixed with a pH adjuster, a freezing stabilizer, an emulsion stabilizer, a viscosity modifier, an antioxidant, an antiseptic, or the like.

In the method for producing a chloroprene polymer composition of the present embodiment, after the polymerization step, unreacted monomers may be removed and then the solid content concentration may be adjusted by a condensation treatment. The solid content concentration of the chloroprene polymer composition of the present embodiment may be, for example, 45 to 65% by mass.

The content of the conjugate resin acid component C (the total amount of compounds corresponding to the conjugate resin acid component C) in the chloroprene polymer composition of the present embodiment may be in the following range on the basis of the total mass of solid content of the chloroprene polymer composition. The content of the conjugate resin acid component C is 0.4% by mass or more, or may be 0.5% by mass or more, 1.0% by mass or more, 1.5% by mass or more, 1.9% by mass or more, 2.0% by mass or more, 3.0% by mass or more, 4.0% by mass or more, 5.0% by mass or more, 6.0% by mass or more, 7.0% by mass or more, or 7.5% by mass or more, from the viewpoint of easily obtaining excellent breaking strength. The content of the conjugate resin acid component C may be 20% by mass or less, 15% by mass or less, 12% by mass or less, 10% by mass or less, 9.0% by mass or less, or 8.5% by mass or less, 8.0% by mass or less, 7.0% by mass or less, 6.0% by mass or less, 5.0% by mass or less, 4.0% by mass or less, 3.0% by mass or less, 2.0% by mass or less, 1.9% by mass or less, 1.5% by mass or less, 1.0% by mass or less, 0.5% by mass or less, or 0.4% by mass or less, from the viewpoint of easily obtaining excellent breaking elongation and the viewpoint of easily maintaining flexibility suitably. From these viewpoints, the content of the conjugate resin acid component C may be 0.1 to 20% by mass, 0.4 to 10% by mass, or 1.0 to 9.0% by mass. The content of the conjugate resin acid component C in the chloroprene polymer composition of the present embodiment can be calculated by gas chromatography of the solid content of the chloroprene polymer composition, and can be calculated by gas chromatography described in Examples.

The content of the conjugate resin acid component C (the total amount of compounds corresponding to the conjugate resin acid component C) in the chloroprene polymer composition of the present embodiment may be in the following range on the basis of the total mass of the chloroprene polymer. The content of the conjugate resin acid component C may be 0.1% by mass or more, 0.2% by mass or more, 0.4% by mass or more, 0.5% by mass or more, 1.0% by mass or more, 1.5% by mass or more, 2.0% by mass or more, 3.0% by mass or more, 4.0% by mass or more, 5.0% by mass or more, 6.0% by mass or more, 7.0% by mass or more, or 8.0% by mass or more, from the viewpoint of easily obtaining excellent breaking strength. The content of the conjugate resin acid component C may be 20% by mass or less, 15% by mass or less, 12% by mass or less, 10% by mass or less, 9.0% by mass or less, 8.5% by mass or less, 8.0% by mass or less, 7.0% by mass or less, 6.0% by mass or less, 5.0% by mass or less, 4.0% by mass or less, 3.0% by mass or less, 2.0% by mass or less, 1.5% by mass or less, 1.0% by mass or less, 0.5% by mass or less, or 0.4% by mass or less, from the viewpoint of easily obtaining excellent breaking elongation and the viewpoint of easily maintaining flexibility suitably. From these viewpoints, the content of the conjugate resin acid component C may be 0.1 to 20% by mass, 0.4 to 10% by mass, or 1.0 to 9.0% by mass.

The average particle diameter of solid content of the chloroprene polymer composition of the present embodiment may be in the following range, from the viewpoint of easily obtaining a dip-molded article having excellent mechanical strength (such as breaking strength and breaking elongation) while suitably maintaining flexibility. The average particle diameter may be 50 nm or more, 80 nm or more, 100 nm or more, 120 nm or more, 130 nm or more, 140 nm or more, 145 nm or more, 150 nm or more, or 160 nm or more. The average particle diameter may be 200 nm or less, 180 nm or less, 160 nm or less, 150 nm or less, 145 nm or less, 140 nm or less, or 130 nm or less. From these viewpoints, the average particle diameter may be 50 to 200 nm, 100 to 160 nm, or 120 to 150 nm.

The viscosity (25°C) of the chloroprene polymer composition of the present embodiment may be in the following range. The viscosity may be 1000 mPa·s or less, 800 mPa·s or less, 500 mPa·s or less, 300 mPa·s or less, 200 mPa·s or less, 150 mPa·s or less, 140 mPa·s or less, 130 mPa·s or less, 125 mPa·s or less, 120 mPa·s or less, 100 mPa·s or less, or 90 mPa·s or less, from the viewpoint of easily obtaining a dip-molded article having excellent mechanical strength (such as breaking strength and breaking elongation) while suitably maintaining flexibility. The viscosity may be 50 mPa·s or more, 80 mPa·s or more, 90 mPa·s or more, 100 mPa·s or more, 120 mPa·s or more, 125 mPa·s or more, 130 mPa·s or more, or 140 mPa·s or more. From these viewpoints, the viscosity may be 50 to 1000 mPa·s, 90 to 500 mPa·s, or 100 to 200 mPa·s. The viscosity can be measured under the conditions of a temperature of 25°C and a rotational speed of 30 rpm.

In the chloroprene polymer composition of the present embodiment, from the viewpoint of obtaining excellent breaking strength in a dip-molded article, in gas chromatography of an extract extracted from a dip-molded article of the chloroprene polymer composition using an ethanol-toluene azeotropic mixture, a ratio of a peak area of conjugate resin acid components that are abietic acid, neoabietic acid, palustric acid, levopimaric acid, and salts thereof is more than 0% and 60% or less on the basis of the total peak area provided by the extract (the total of peak areas detected by gas chromatography).

The extract for obtaining the aforementioned ratio of the peak area of the conjugate resin acid component can be extracted using an ethanol-toluene azeotropic mixture (ETA solution, volume ratio, ethanol: toluene = 70 : 30). A dip-molded article having the aforementioned ratio of the peak area of the conjugate resin acid component can be obtained by the following procedures.
(1) A cylinder having an outside diameter of 50 mm is immersed in a congealing liquid (room temperature) obtained by mixing 61 parts by mass of water, 36 parts by mass of potassium nitrate tetrahydrate, and 3 parts by mass of calcium carbonate for 1 second and is then taken out.
(2) Drying is performed at room temperature for 3 minutes and drying is then performed at 70°C for 1 minute.
(3) The cylinder is immersed in the chloroprene polymer latex composition (room temperature, solid content concentration: 30% by mass) for 2 minutes.
(4) Drying is performed at 130°C for 3 minutes and washing is then performed at 45°C for 1 minute.
(5) Vulcanization is performed at 130°C for 30 minutes.

The ratio of the peak area of the conjugate resin acid component may be 0.1% or more, 0.2% or more, 0.4% or more, 0.5% or more, 1.0% or more, 2.0% or more, 3.0% or more, 4.0% or more, 4.6% or more, 4.7% or more, 4.8% or more, 5.0% or more, 8.0% or more, 10% or more, 15% or more, 17% or more, 20% or more, 25% or more, 30% or more, 35% or more, or 40% or more, from the viewpoint of easily obtaining excellent breaking strength. The ratio of the peak area of the conjugate resin acid component is 50% or less, 45% or less, or may be 40% or less, 35% or less, 30% or less, 25% or less, 20% or less, 17% or less, 15% or less, 10% or less, 8.0% or less, 5.0% or less, 4.8% or less, 4.7% or less, 4.6% or less, 4.0% or less, 3.0% or less, 2.0% or less, 1.0% or less, 0.5% or less, or 0.4% or less, from the viewpoint of easily obtaining excellent breaking elongation and the viewpoint of easily maintaining flexibility suitably. From these viewpoints, the ratio of the peak area of the conjugate resin acid component may be 0.1 to 50%, 0.4 to 40%, or 4.0 to 20%. The ratio of the peak area of the conjugate resin acid component can be adjusted by the used amount of the conjugate resin acid component C when a chloroprene polymer composition is obtained.

The chloroprene polymer composition of the present embodiment may contain an additive such as a vulcanizing agent, a vulcanization accelerator, an anti-aging agent (an antioxidant; for example, an ozone antioxidant), a filler, a plasticizer, a pigment, a coloring agent, a wetting agent, or an antifoaming agent. The chloroprene polymer composition of the present embodiment may be a mixed solution for dip molding containing the chloroprene polymer and these additives.

Examples of the vulcanizing agent include sulfur (molecular sulfur; for example, cyclic sulfur such as S8); metal oxides such as zinc oxide, lead oxide, and trilead tetraoxide; and magnesium oxide. The content of the vulcanizing agent may be 0.5 to 10 parts by mass with respect to 100 parts by mass of solid content of the mixture obtained by excluding the aforementioned additive from the chloroprene polymer composition, from the viewpoint of easily causing crosslinking to sufficiently proceed and easily obtaining the tensile strength, modulus, and the like of a dip-molded article suitably, and the viewpoint of easily obtaining a suitable texture of a dip-molded article.

Examples of the vulcanization accelerator include thiuram-based, dithiocarbamate-based, thiourea-based, guanidine-based, xanthate-based, and thiazole-based vulcanization accelerators.

Examples of the anti-aging agent include diphenylamine-based compounds such as octylated diphenylamine, p-(p-toluene-sulfonylamide)diphenylamine, 4,4'-bis(α,α-dimethylbenzyl)diphenylamine, N,N'-diphenyl-p-phenylenediamine (DPPD), and N-isopropyl-N'-phenyl-p-phenylenediamine (IPPD). Examples of the ozone antioxidant include N,N'-diphenyl-p-phenylenediamine (DPPD) and N-isopropyl-N'-phenyl-p-phenylenediamine (IPPD). As the anti-aging agent, in the case of importantly taking appearance (particularly, color tone) or hygienic properties into consideration for medical gloves and the like, a hindered phenol-based antioxidant can be used. The content of the anti-aging agent may be 0.1 to 5 parts by mass with respect to 100 parts by mass of solid content of the mixture obtained by excluding the aforementioned additive from the chloroprene polymer composition, from the viewpoint of easily obtaining the anti-aging effect sufficiently.

### <Vulcanizate, dip-molded article, producing methods for these>

A vulcanizate may be obtained by vulcanizing the chloroprene polymer composition of the present embodiment. A vulcanizate of the present embodiment is a vulcanizate of the chloroprene polymer composition of the present embodiment and is obtained by vulcanizing the chloroprene polymer composition of the present embodiment. A method for manufacturing a vulcanizate of the present embodiment includes a step of vulcanizing the chloroprene polymer composition of the present embodiment to obtain a vulcanizate. The vulcanizate of the present embodiment may have a film shape.

A dip-molded article of the present embodiment is a dip-molded article of the chloroprene polymer composition of the present embodiment. The dip-molded article of the present embodiment is a dip-molded article using the chloroprene polymer composition of the present embodiment and is obtained by dip-molding the chloroprene polymer composition of the present embodiment. The dip-molded article of the present embodiment may be a dip-molded film formed on a base material. The dip-molded article of the present embodiment has excellent breaking strength and breaking elongation while suitably maintaining flexibility. The dip-molded article of the present embodiment may be a molded article of the vulcanizate of the present embodiment. The dip-molded article of the present embodiment may be gloves, balloons, catheters, or boots.

The thickness (for example, the minimum thickness) of the dip-molded article may be 0.01 to 0.50 mm, 0.10 to 0.50 mm, 0.10 to 0.30 mm, or 0.10 to 0.25 mm. The thickness of the dip-molded article can be adjusted by a time for immersing a molding die in the chloroprene polymer composition, the solid content concentration of the chloroprene polymer composition, or the like. In a case where the thickness of the dip-molded article is desired to be decreased, the immersion time may be shortened, or the solid content concentration of the chloroprene polymer composition may be lowered.

In a method for producing a dip-molded article of the present embodiment, a chloroprene polymer composition obtained by the method for producing a chloroprene polymer composition of the present embodiment or the chloroprene polymer composition of the present embodiment is dip-molded. As a forming method used when the dip-molded article of the present embodiment is produced, a known method can be used, and example thereof include a simple dipping method, a coagulant dipping method, a thermosensitive dipping method, and an electrodeposition method. From the viewpoint of ease of production and the viewpoint of easily obtaining a dip-molded article having a constant thickness, a coagulant dipping method can be used. Specifically, a molding die coated with a coagulant is immersed in the chloroprene polymer composition, and then the chloroprene polymer composition is solidified. Then, water-soluble impurities are removed by leaching, drying is then performed, and further vulcanization is performed to form a dip-molded film (rubber coating film), and then the dip-molded film is released from the mold. Thereby, a film-shaped dip-molded article can be obtained.

### Examples

Hereinafter, the present invention will be more specifically described on the basis of Examples and Comparative Examples; however, the present invention is not limited to these Examples.

### <Preparation of chloroprene polymer latex>

### (Example A1)

To a polymerization tank having an inner volume of 40 L, 90.5 parts by mass of chloroprene (monomer), 9.5 parts by mass of 2,3-dichloro-1,3-butadiene (monomer), 0.032 parts by mass of n-dodecylmercaptan, 84.3 parts by mass of pure water, 4.8 parts by mass of a disproportionated rosin (manufactured by ARAKAWA CHEMICAL INDUSTRIES, LTD., trade name: RONDIS K-25), 0.75 parts by mass of potassium hydroxide, 0.40 parts by mass of sodium bisulfite, and 0.40 parts by mass of a sodium salt of β-naphthalene sulfonic acid formalin condensate (manufactured by Kao Corporation, trade name: DEMOL N) were added. 0.1 parts by mass of potassium persulfate was added as a polymerization initiator, and then polymerization was performed under a nitrogen flow at a polymerization temperature of 40°C. 0.007 parts by mass of diethylhydroxylamine as a polymerization inhibitor was added at the time point of a polymerization rate of 90% to terminate the polymerization, thereby obtaining a latex A1.

This latex A1 was subjected to distillation under a reduced pressure to remove unreacted monomers and then subjected to a condensation treatment, thereby obtaining a latex A2 (solid content concentration: 60% by mass) containing a chloroprene polymer. The gel content rate (toluene insoluble content) of solid content of this latex A2 was measured to be 88% by mass.

Next, a rosin (manufactured by Harima Chemicals, Inc., trade name: HARTALL R-WW) was dissolved in a potassium hydroxide aqueous solution to obtain a rosin solution (solid content concentration: 12.5% by mass). This rosin solution and the latex A2 were mixed at a ratio of 1.0 part by mass of a potassium salt of a rosin acid (a rosin containing a conjugate resin acid component) with respect to 100 parts by mass of solid content of the latex A2 to obtain a chloroprene polymer latex.

### (Examples A2 to A4)

A chloroprene polymer latex was obtained in the same manner as in Example A1, except that a potassium salt of a rosin acid (a rosin containing a conjugate resin acid component) was mixed in an amount shown in Table 1 with respect to 100 parts by mass of solid content of the latex A2 by changing a mixed amount of the rosin solution to be mixed with the latex A2.

### (Comparative Example A1)

The latex A2 was used as the chloroprene polymer latex without mixing a rosin solution with the latex A2 of Example A1.

### (Comparative Example A2)

A disproportionated rosin (manufactured by ARAKAWA CHEMICAL INDUSTRIES, LTD., trade name: RONDIS K-25, conjugate resin acid: 0%, non-conjugate resin acid: 93.9%) was dissolved in a potassium hydroxide aqueous solution to obtain a rosin solution (solid content concentration: 12.5% by mass). This rosin solution and the latex A2 of Example A1 were mixed to obtain a chloroprene polymer latex containing 5 parts by mass of a potassium salt of a disproportionated rosin with respect to 100 parts by mass of solid content of the latex A2.

### (Comparative Example A3)

A disproportionated rosin (manufactured by ARAKAWA CHEMICAL INDUSTRIES, LTD., trade name: RONDIS K-25, conjugate resin acid: 0%, non-conjugate resin acid: 93.9%) was dissolved in a potassium hydroxide aqueous solution to obtain a rosin solution (solid content concentration: 12.5% by mass). This rosin solution and the latex A2 of Example A1 were mixed to obtain a chloroprene polymer latex containing 20 parts by mass of a potassium salt of a disproportionated rosin with respect to 100 parts by mass of solid content of the latex A2.

### (Comparative Example A4)

A chloroprene polymer latex was obtained in the same manner as in Example A1, except that 25 parts by mass of a potassium salt of a rosin acid (a rosin containing a conjugate resin acid component) was mixed with respect to 100 parts by mass of solid content of the latex A2 by changing a mixed amount of the rosin solution to be mixed with the latex A2.

### (Example B1)

To a polymerization tank having an inner volume of 40 L, 90.5 parts by mass of chloroprene (monomer), 9.5 parts by mass of 2,3-dichloro-1,3-butadiene (monomer), 0.032 parts by mass of n-dodecylmercaptan, 84.3 parts by mass of pure water, 4.8 parts by mass of a disproportionated rosin (manufactured by ARAKAWA CHEMICAL INDUSTRIES, LTD., trade name: RONDIS K-25), 0.75 parts by mass of potassium hydroxide, 0.40 parts by mass of sodium bisulfite, and 0.40 parts by mass of a sodium salt of β-naphthalene sulfonic acid formalin condensate (manufactured by Kao Corporation, trade name: DEMOL N) were added. 0.1 parts by mass of potassium persulfate was added as a polymerization initiator, and then polymerization was performed under a nitrogen flow at a polymerization temperature of 40°C. At the time point of a polymerization rate of 20%, 4.5 parts by mass of a potassium salt of a rosin acid (a rosin containing a conjugate resin acid component) was added by a rosin solution (solid content concentration: 12.5% by mass) obtained by dissolving a rosin (manufactured by Harima Chemicals, Inc., trade name: HARTALL R-WW) in a potassium hydroxide aqueous solution. Thereafter, the polymerization was continued, and 0.007 parts by mass of diethylhydroxylamine as a polymerization inhibitor was added at the time point of a polymerization rate of 90% to terminate the polymerization, thereby obtaining a latex B. The addition amount of the potassium salt of the rosin acid (the rosin containing a conjugate resin acid component) mentioned above was 5.0 parts by mass with respect to 100 parts by mass of solid content of the latex B. This latex B was subjected to distillation under a reduced pressure to remove unreacted monomers and then subjected to a condensation treatment, thereby obtaining a chloroprene polymer latex.

### (Example B2)

A chloroprene polymer latex was obtained in the same manner as in Example B 1, except that a potassium salt of a rosin acid (a rosin containing a conjugate resin acid component) was added by the rosin solution at the time point of a polymerization rate of 85% instead of a polymerization rate of 20%.

### (Comparative Example B 1)

A chloroprene polymer latex was obtained in the same manner as in Example B 1, except that a potassium salt of a rosin acid (a rosin containing a conjugate resin acid component) was added by the rosin solution at the time point of a polymerization rate of 15% instead of a polymerization rate of 20%.

### <Content of resin acid component in rosin>

As the contents of the conjugate resin acid component and the non-conjugate resin acid component in the rosin (manufactured by Harima Chemicals, Inc., trade name: HARTALL R-WW) mentioned above, the total amount of abietic acid, neoabietic acid, palustric acid, levopimaric acid, and salts thereof (the content of the conjugate resin acid component C) and the total amount of dehydroabietic acid, dihydroabietic acid, pimaric acid, isopimaric acid, and salts thereof (the content of the non-conjugate resin acid component N) were measured by the following procedures, and as a result, on the basis of the total mass of the rosin, the content of the conjugate resin acid component C was 38.7% by mass and the content of the non-conjugate resin acid component N was 48.4% by mass.

First, 0.30 g of a rosin was dissolved in 10 mL of an ETA solution (volume ratio, ethanol : toluene = 70 : 30) and then subjected to a hydrochloric acid treatment, thereby obtaining a solution (rosin: 3% by mass). 5 mL of this solution collected by a whole pipette was placed in a 10-mL measuring flask and then diluted with the ETA solution, thereby obtaining a solution (rosin: 1.5% by mass). Gas chromatography was performed under the following conditions using this solution. From the measurement result of the gas chromatography, the peak area of each of an abietic acid component (abietic acid and a salt thereof; this is also the same for other resin acid components), a neoabietic acid component, a palustric acid component, and a levopimaric acid component was determined, and the peak area of each of a dehydroabietic acid component, a pimaric acid component, an isopimaric acid component, and a dihydroabietic acid component was determined. As the peak area of the conjugate resin acid component, the total peak area of the abietic acid component, the neoabietic acid component, the palustric acid component, and the levopimaric acid component was calculated, and then the ratio of the peak area of the conjugate resin acid component based on of the total of peak areas detected by gas chromatography was calculated as the content of the conjugate resin acid component C. As the peak area of the non-conjugate resin acid component, the total peak area of the neoabietic acid component, the palustric acid component, and the levopimaric acid component was calculated, and then the ratio of the peak area of the non-conjugate resin acid component based on the total of peak areas detected by gas chromatography was calculated as the content of the non-conjugate resin acid component N.

### [Conditions of gas chromatography]

· Gas chromatograph mass spectrometer: trade name "JEOL Jms-Q1050GC", manufactured by JEOL Ltd.
· Used column: FFAP 0.32 mmφ × 25 m (film thickness: 0.3 µm)
· Column temperature: 200°C -> 250°C
· Temperature increase rate: 10°C/min
· Injection port temperature: 270°C
· Injection amount: 1 µL
· Interface temperature: 270°C
· Ion source temperature: 270°C
· Ionization current: 50 µA
· Ionization voltage: 70 eV
· Detector: FID
· Detector voltage: -1000 V
· Detector voltage: EI method
· Detector temperature: 270°C

### <Content of conjugate resin acid component in chloroprene polymer latex>

3 g of the solid content obtained by freeze-drying the aforementioned chloroprene polymer latex was cut into 2 mm square to obtain a test piece. This test piece was placed in an eggplant-shaped flask equipped with condenser, extracted with an ETA solution (volume ratio, ethanol : toluene = 70 : 30), and then subjected to a hydrochloric acid treatment to obtain an extract, gas chromatography was performed using the extract under the same aforementioned conditions as those of analysis of the contents of the conjugate resin acid component and the non-conjugate resin acid component in the rosin mentioned above, and the content of the conjugate resin acid components (the total amount of abietic acid, neoabietic acid, palustric acid, levopimaric acid, and salts thereof) in the chloroprene polymer latex was calculated. As the content of the conjugate resin acid component, the content based on the total mass of the solid content of the chloroprene polymer latex and the content based on the total mass of the chloroprene polymer were calculated. The ratio of the chloroprene polymer in the solid content of the chloroprene polymer latex can be calculated on the basis of the used amount of the monomer and the disproportionated rosin, the polymerization rate, and the like, and the content of the conjugate resin acid component based on the total mass of the chloroprene polymer is the content that is 1.05 times the content of the conjugate resin acid component based on the total mass of the solid content of the chloroprene polymer latex. Results are shown in Table 1 and Table 2.

### <Average particle diameter of solid content in chloroprene polymer latex>

The particle size distribution based on scattering intensity in the solid content in the chloroprene polymer latex was measured using an optical scattering diffraction particle size measurement apparatus (manufactured by Otsuka Electronics Co., Ltd., Model No.: ELSZ-2). The average particle diameter was determined on the basis of the measurement result of particle size distribution based on scattering intensity. Results are shown in Table 1 and Table 2.

### <Viscosity of chloroprene polymer latex>

The viscosity of the chloroprene polymer latex was measured using a rotational type viscometer (manufactured by Toki Sangyo Co., Ltd., Model No.: TV-25) under the conditions of a temperature of 25°C and a rotational speed of 30 rpm. Results are shown in Table 1 and Table 2.

### <Production of chloroprene polymer latex composition>

An aqueous dispersion was prepared by mixing 1 part by mass of sulfur, 2 parts by mass of zinc oxide (manufactured by SAKAI CHEMICAL INDUSTRY CO., LTD., trade name "Zinc oxide II"), 2 parts by mass of a vulcanization accelerator (manufactured by OUCHI SHINKO CHEMICAL INDUSTRIAL CO., LTD., trade name: NOCCELER BZ), 2 parts by mass of an anti-aging agent (manufactured by OMNOVA Solutions Inc., trade name: Wingstay-L), 0.1 parts by mass of a sodium salt of β-naphthalene sulfonic acid formalin condensate (manufactured by Kao Corporation, trade name: DEMOL N), and 10.7 parts by mass of water at 20°C for 16 hours using a ceramic ball mill. This aqueous dispersion (solid content: 7.1 parts by mass) was mixed with the aforementioned chloroprene polymer latex (solid content: 100 parts by mass), and then water was added to adjust the entire solid content concentration to 30% by mass, thereby producing a chloroprene polymer latex composition.

### <Production of film for evaluation>

A congealing liquid was obtained by mixing 61 parts by mass of water, 36 parts by mass of potassium nitrate tetrahydrate, and 3 parts by mass of calcium carbonate. A ceramic cylinder (material: ceramic, manufactured by SHINKO IND. LTD.) having an outside diameter of 50 mm was immersed in this congealing liquid (room temperature) for 1 second and was then taken out. Drying was performed at room temperature for 3 minutes and drying was then performed at 70°C for 1 minute. Thereafter, the cylinder was immersed in the aforementioned chloroprene polymer latex composition (room temperature) for 2 minutes. Subsequently, drying was performed at 130°C for 3 minutes and washing was then performed in a water bath having a volume of 11 L at 45°C for 1 minute. Thereafter, vulcanization was performed at 130°C for 30 minutes, thereby producing a film for evaluation (a dip-molded article, a vulcanized film) on the outer periphery and the like of the cylinder. The film for evaluation was peeled off from the outer periphery of the cylinder and then the following evaluation was performed. However, in Comparative Example B1, since the particle diameter of the solid content in the chloroprene polymer latex was enlarged, the viscosity was excessively increased, so that a film for evaluation could not be produced.

### <Thickness of film for evaluation>

The thicknesses (film thicknesses) of three places at the center portion of the film for evaluation were measured using a test piece thickness meter (manufactured by KOBUNSHI KEIKI CO., LTD., trade name "ASKER SDA-12") and the minimum thickness was obtained as the thickness of the film for evaluation. Results are shown in Table 1 and Table 2.

### <Ratio of peak area of conjugate resin acid component in film for evaluation>

The film for evaluation was charged in an ETA solution (volume ratio, ethanol : toluene = 70 : 30) and subjected to reflux extraction at 90°C for 1 hour, thereby obtaining an extraction liquid. After the ETA solution was vaporized to extract the rosin component, hydrochloric acid was added thereto to obtain an acid solution, and the acid solution was vaporized. Thereafter, gas chromatography was performed using the extraction liquid, which had been diluted to 20 mL in total by addition of methanol, under the same conditions as in the content of the resin acid component in the rosin mentioned above. As the peak area of the conjugate resin acid component, the total peak area of the abietic acid component, the neoabietic acid component, the palustric acid component, and the levopimaric acid component was calculated, and then the ratio of the peak area of the conjugate resin acid component based on the total of peak areas detected by gas chromatography was calculated. Results are shown in Table 1 and Table 2.

### <Physical properties of film for evaluation>

The modulus at 25% elongation, the modulus at 300% elongation, the breaking strength, and the breaking elongation of the film for evaluation were measured according to JIS K 6251. Results are shown in Table 1 and Table 2. A case where the breaking strength was 20.0 MPa or more was determined as good.

**[Table 1]**

| | | | Unit | Example | | | | Comparative Example | | | |
|---|---|---|---|---|---|---|---|---|---|---|---|
| | | | | A1 | A2 | A3 | A4 | A1 | A2 | A3 | A4 |
| Chloroprene polymer latex | Rosin containing conjugate resin acid component | During mixing | - | After polymerization | | | | - | - | - | After polymerization |
| | | Polymerization rate at the time point of mixing | % | 90 | 90 | 90 | 90 | - | - | - | 90 |
| | | Mixed amount (vs 100 parts by mass of solid content of latex during mixing) | parts by mass | 1.0 | 5.0 | 10 | 20 | - | - | - | 25 |
| | Content of conjugate resin acid component (vs total mass of solid content of chloroprene polvmer latex) | | %by mass | 0.4 | 1.9 | 3.9 | 7.7 | 0 | 0 | 0 | 9.7 |
| | Content of conjugate resin acid component (vs total mass of chloroprene polymer) | | % by mass | 0.4 | 2.0 | 4.1 | 8.1 | 0 | 0 | 0 | 10.2 |
| | Average particle diameter | | nm | 130 | 130 | 130 | 130 | 130 | 130 | 130 | 130 |
| | Viscosity | | mPa·s | 140 | 140 | 140 | 140 | 140 | 140 | 140 | 140 |
| Film for evaluation | Thickness of film | | mm | 0.21 | 0.16 | 0.15 | 0.13 | 0.21 | 0.17 | 0.15 | 0.12 |
| | Ratio of peak area of conjugate resin acid component (vs total of conjugate resin acid component and non-conjugate resin acid component) | | % | 0.4 | 4.7 | 17 | 40 | 0 | 0 | 0 | 70 |
| | Modulus at 25% elongation | | MPa | 0.5 | 0.4 | 0.5 | 1.1 | 0.5 | 0.6 | 0.6 | 1.5 |
| | Modulus at 300% elongation | | MPa | 0.9 | 1.1 | 1.4 | 2.1 | 0.9 | 1.1 | 1.2 | 2.7 |
| | Breaking strength | | MPa | 20.0 | 20.2 | 22.0 | 23.4 | 18.1 | 18.4 | 18.3 | 19.3 |
| | Breaking elongation | | % | 1150 | 1127 | 1087 | 1062 | 1280 | 1272 | 1260 | 935 |

**[Table 2]**

| | | | Unit | Example | | Comparative Example |
|---|---|---|---|---|---|---|
| | | | | B1 | B2 | B1 |
| Chloroprene polymer latex | Rosin containing conjugate resin acid component | During mixing | - | During polymerization | | |
| | | Polymerization rate at the time point of mixing | % | 20 | 85 | 15 |
| | | Mixed amount (vs 100 parts by mass of monomers) | parts by mass | 4.5 | 4.5 | 4.5 |
| | | Mixed amount (vs 100 parts by mass of solid content of latex after end of polymerization) | parts by mass | 5.0 | 5.0 | 5.0 |
| | Content of conjugate resin acid component (vs total mass of solid content of chloroprene polymer latex) | | % by mass | 1.9 | 1.9 | 1.9 |
| | Content of conjugate resin acid component (vs total mass of chloroprene polymer) | | % by mass | 2.0 | 2.0 | 2.0 |
| | Average particle diameter | | nm | 160 | 145 | 30 |
| | Viscosity | | mPa·s | 90 | 125 | 1200 |
| Film for evaluation | Thickness of film | | mm | 0.17 | 0.16 | Unavailable production |
| | Ratio of peak area of conjugate resin acid component (vs total of conjugate resin acid component and non-conjugate resin acid component) | | % by mass | 4.8 | 4.6 | |
| | Modulus at 25% elongation | | MPa | 0.4 | 0.4 | |
| | Modulus at 300% elongation | | MPa | 1.4 | 1.2 | |
| | Breaking strength | | MPa | 20.1 | 20.3 | |
| | Breaking elongation | | % | 1163 | 1182 | |

## Claims

1. A method for producing a chloroprene polymer composition containing a chloroprene polymer, the method comprising:
a first polymerization step of polymerizing a monomer containing chloroprene at a polymerization rate of 20% or more to obtain a first polymer composition containing a polymer;
a mixing step of mixing the first polymer composition with a rosin containing at least one conjugate resin acid component selected from the group consisting of abietic acid, neoabietic acid, palustric acid, levopimaric acid, and salts thereof; and
a second polymerization step of polymerizing a monomer containing chloroprene in the presence of the polymer and the conjugate resin acid component to obtain a second polymer composition containing a chloroprene polymer.

2. The method for producing a chloroprene polymer composition according to claim 1, wherein a mixed amount of the rosin in the mixing step is more than 0 parts by mass and 23 parts by mass or less with respect to 100 parts by mass of solid content of the second polymer composition.

3. The method for producing a chloroprene polymer composition according to any one of claims 1 to 2, wherein a total amount of abietic acid, neoabietic acid, palustric acid, levopimaric acid, and salts thereof in the rosin is 30% by mass or more on the basis of a total mass of the rosin.

4. The method for producing a chloroprene polymer composition according to any one of claims 1 to 3, wherein the monomer further contains 2,3-dichloro-1,3-butadiene.

5. A chloroprene polymer composition comprising a chloroprene polymer, wherein
in gas chromatography of an extract extracted from a dip-molded article of the chloroprene polymer composition using an ethanol-toluene azeotropic mixture, a ratio of a peak area of conjugate resin acid components that are abietic acid, neoabietic acid, palustric acid, levopimaric acid, and salts thereof is more than 0% and 50% or less on the basis of a total peak area provided by the extract; and
wherein a content of the conjugate resin acid components is 0.4% by mass or more on the basis of the total mass of the chloroprene polymer.

6. The chloroprene polymer composition according to claim 5, wherein a content of the conjugate resin acid component is 0.4 to 10% by mass on the basis of a total mass of the chloroprene polymer.

7. A dip-molded article of the chloroprene polymer composition according to claim 5 or 6.

8. The dip-molded article according to claim 7, wherein the dip-molded article is gloves, balloons, catheters, or boots.

9. A method for producing a dip-molded article, the method comprising dip-molding a chloroprene polymer composition obtained by the method for producing a chloroprene polymer composition according to any one of claims 1 to 4 or the chloroprene polymer composition according to claim 5 or 6.

## Patentansprüche

1. Verfahren zur Herstellung einer Chloroprenpolymerzusammensetzung enthaltend ein Chloroprenpolymer, wobei das Verfahren umfasst:
einen ersten Polymerisationsschritt des Polymerisierens eines Monomers enthaltend Chloropren, mit einer Polymerisationsrate von 20% oder mehr, um eine erste Polymerzusammensetzung zu erhalten, die ein Polymer enthält;
einen Mischschritt des Mischens der ersten Polymerzusammensetzung mit einem Kolophonium (rosin) enthaltend mindestens eine konjugierte Harzsäurekomponente ausgewählt aus der Gruppe, bestehend aus Abietinsäure, Neoabietinsäure, Palustrinsäure, Levopimarsäure und Salzen davon; und
einen zweiten Polymerisationsschritt des Polymerisierens eines Monomers enthaltend Chloropren, in Gegenwart des Polymers und der konjugierten Harzsäurekomponente, um eine zweite Polymerzusammensetzung zu erhalten, die ein Chloroprenpolymer enthält.

2. Verfahren zur Herstellung einer Chloroprenpolymerzusammensetzung gemäß Anspruch 1, wobei eine gemischte Menge des Kolophoniums in dem Mischschritt mehr als 0 Massenteile und 23 Massenteile oder weniger, bezogen auf 100 Massenteile Feststoffgehalt der zweiten Polymerzusammensetzung, beträgt.

3. Verfahren zur Herstellung einer Chloroprenpolymerzusammensetzung gemäß mindestens einem der Ansprüche 1 bis 2, wobei die Gesamtmenge an Abietinsäure, Neoabietinsäure, Palustrinsäure, Levopimarsäure und Salzen davon in dem Kolophonium 30 Massenprozent oder mehr, bezogen auf die Gesamtmasse des Kolophoniums, beträgt.

4. Verfahren zur Herstellung einer Chloroprenpolymerzusammensetzung gemäß mindestens einem der Ansprüche 1 bis 3, wobei das Monomer ferner 2,3-Dichlor-1,3-butadien enthält.

5. Chloroprenpolymerzusammensetzung, umfassend ein Chloroprenpolymer, wobei
bei der Gaschromatographie eines Extrakts, der aus einem tauchgeformten Gegenstand der Chloroprenpolymerzusammensetzung unter Verwendung einer azeotropen Ethanol-Toluol-Mischung extrahiert wurde, das Verhältnis der Peakfläche der konjugierten Harzsäurekomponenten, die Abietinsäure, Neoabietinsäure, Palustrinsäure, Levopimarsäure und deren Salze sind, mehr als 0 % und 50 % oder weniger, bezogen auf die gesamte Peakfläche des Extrakts, beträgt; und
wobei der Gehalt der konjugierten Harzsäurekomponenten 0,4 Massenprozent oder mehr, bezogen auf die Gesamtmasse des Chloroprenpolymers, beträgt.

6. Chloroprenpolymerzusammensetzung gemäß Anspruch 5, wobei der Gehalt der konjugierten Harzsäurekomponente 0,4 bis 10 Massenprozent, bezogen auf die Gesamtmasse des Chloroprenpolymers, beträgt.

7. Tauchgeformter Gegenstand aus der Chloroprenpolymerzusammensetzung gemäß Anspruch 5 oder 6.

8. Tauchgeformter Gegenstand gemäß Anspruch 7, wobei der tauchgeformte Gegenstand Handschuhe, Ballons, Katheter oder Stiefel ist.

9. Verfahren zur Herstellung eines tauchgeformten Gegenstands, wobei das Verfahren umfasst das Tauchformen einer Chloroprenpolymerzusammensetzung erhalten durch das Verfahren zur Herstellung einer Chloroprenpolymerzusammensetzung gemäß mindestens einem der Ansprüche 1 bis 4 oder der Chloroprenpolymerzusammensetzung gemäß Anspruch 5 oder 6.

## Revendications

1. Procédé de production d'une composition de polymère de chloroprène contenant un polymère de chloroprène, le procédé comprenant :
une première étape de polymérisation consistant à polymériser un monomère contenant du chloroprène à un taux de polymérisation de 20 % ou plus pour obtenir une première composition de polymère contenant un polymère ;
une étape de mélange consistant à mélanger la première composition de polymère avec une colophane contenant au moins un composant acide de résine conjugué sélectionné dans le groupe consistant en l'acide abiétique, l'acide néoabiétique, l'acide palustrique, l'acide lévopimarique, et les sels de ceux-ci ; et
une seconde étape de polymérisation consistant à polymériser un monomère contenant du chloroprène en présence du polymère et du composant acide de résine conjugué pour obtenir une seconde composition de polymère contenant un polymère de chloroprène.

2. Procédé de production d'une composition de polymère de chloroprène selon la revendication 1, dans lequel une quantité mélangée de colophane dans l'étape de mélange est de plus de 0 partie en masse et de 23 parties en masse ou moins par rapport à 100 parties en masse de teneur en solides de la seconde composition de polymère.

3. Procédé de production d'une composition de polymère de chloroprène selon l'une quelconque des revendications 1 à 2, dans lequel une quantité totale d'acide abiétique, d'acide néoabiétique, d'acide palustrique, d'acide lévopimarique et de sels de ceux-ci dans la colophane est de 30 % en masse ou plus sur la base d'une masse totale de la colophane.

4. Procédé de production d'une composition de polymère de chloroprène selon l'une quelconque des revendications 1 à 3, dans lequel le monomère contient en outre du 2,3-dichloro-1,3-butadiène.

5. Composition de polymère de chloroprène comprenant un polymère de chloroprène, dans laquelle
dans une chromatographie en phase gazeuse d'un extrait extrait d'un article moulé par immersion de la composition de polymère de chloroprène en utilisant un mélange azéotropique d'éthanol-toluène, un rapport d'une surface de pic des composants acide de résine conjugué qui sont l'acide abiétique, l'acide néoabiétique, l'acide palustrique, l'acide lévopimarique et les sels de ceux-ci est de plus de 0 % et de 50 % ou moins sur la base d'une surface de pic totale fournie par l'extrait ; et
dans laquelle une teneur en composants acide de résine conjugué est de 0,4 % en masse ou plus sur la base de la masse totale du polymère de chloroprène.

6. Composition de polymère de chloroprène selon la revendication 5, dans laquelle une teneur en composant acide de résine conjugué est de 0,4 à 10 % en masse sur la base d'une masse totale du polymère de chloroprène.

7. Article moulé par immersion de la composition de polymère de chloroprène selon la revendication 5 ou la revendication 6.

8. Article moulé par immersion selon la revendication 7, dans laquelle l'article moulé par immersion est des gants, des ballons, des cathéters ou des bottes.

9. Procédé de production d'un article moulé par immersion, le procédé comprenant le moulage par immersion d'une composition de polymère de chloroprène obtenue par le procédé de production d'une composition de polymère de chloroprène selon l'une quelconque des revendications 1 à 4 ou de la composition de polymère de chloroprène selon la revendication 5 ou la revendication 6.
